# EUROPÄISCHE PATENTSCHRIFT

(11) **EP 0 729 790 B1**
(45) Veröffentlichungstag und Bekanntmachung des Hinweises auf die Patenterteilung: **02.05.2001**
(21) Anmeldenummer: 96101250.7
(22) Anmeldetag: 30.01.1996
(51) Int. Cl.: B04B 13/00, B04B 5/04, G01N 15/04

(54) **Zentrifuge**
Centrifuge
Centrifugeuse

(30) Priorität: 03.02.1995 DE 19503534
(43) Veröffentlichungstag der Anmeldung: 04.09.1996
(73) Patentinhaber: Fresenius AG, 61350 Bad Homburg v.d.H (DE)
(72) Erfinder: Biesel, Wolfgang, Dr., D-66564 Ottweiler (DE); Kreber, Stefan, D-66113 Saarbrücken (DE); Brass, Henning, D-66424 Homburg (DE); Witthaus, Friedrich, D-66606 St. Wendel (DE); Meisberger, Artur, D-66606 St. Wendel (DE)
(74) Vertreter: Luderschmidt, Schüler & Partner GbR

(56) Entgegenhaltungen:
- EP-A- 0 535 618
- DE-A- 2 037 530
- US-A- 4 493 691

## Beschreibung

Die Erfindung betrifft eine Zentrifuge nach dem Oberbegriff des Patentanspruchs 1.

Die bekannten Zentrifugen für die Separation von Vollblut in seine Bestandteile weisen eine im wesentlichen rotatiossymmetrische Separatioskammer aus transparentem Material auf. Die Lage der Trenngrenze zwischen den separierten Bestandteilen in der rotierenden Kammer wird bei den bekannten Zentrifugen mit einem optischen Phasendetektor überwacht. Zur Phasengrenzendetektion wird ein bestimmter Bereich der Separationskammer, d.h. das Phasengrenzenfenster, mit einer Lichtquelle bestrahlt, wobei die durch das Phasengrenzenfenster hindurchtretenden Lichtstrahlen von einem ortsfest angeordneten Lichtempfänger detektiert werden. Derartige Einrichtungen sind in der DE-A-33 01 113 oder DE-A-41 32 965 beschrieben. Um die Erfassung von Fehlersignalen zu vermeiden, erfolgt die Bestrahlung der Separationskammer und die Auswertung der von dem Lichtdetektor ermittelten Wert nur dann, wenn das Phasengrenzenfenster der rotierenden Kammer zwischen Lichtquelle und Lichtempfänger des Phasengrenzendetektors liegt. Daher ist es notwendig, die Lage des Phasengrenzenfensters in bezug auf den Phasengrenzendetektor zu bestimmen.

Bei den bekannten Zentrifugen zur Separation von Blutkomponenten finden im allgemeinen Einweg-Separationskammern Verwendung. Diese werden in die Antriebseinheit der Zentrifuge eingesetzt und können nach Gebrauch gegen eine neue Kammer ausgetauscht werden. Der die Separationskammer aufnehmende Rotor der Antriebseinheit ist mit einem Drehzahlgeber versehen, um sowohl die Rotordrehzahl als auch die Position des Rotors und damit die Lage des Phasengrenzenfensters der in den Rotor eingelegten Separationskammer bestimmen zu können.

Nachteilig ist, daß die Separationskammer der bekannten Zentrifugen immer nur in einer bestimmten Position in den Rotor der Antriebseinheit eingesetzt werden darf. Wird die Kammer nämlich versehentlich verkehrt in den Rotor eingelgt, erfolgt die Erzeugung des Triggersignals zu einem Zeitpunkt, zu dem das Phasengrenzenfenster der Kammer relativ zum Phasengrenzendeketor verschoben ist. In diesem Fall werden falsche Werte an die Anwerteinheit ausgegeben.

Aus der EP-A-0 535 618 ist eine Separationskammer bekannt, die einen transparenten Ausschnitt zur Beobachtung der Phasengrenzen aufweist, der von Referenzstreifen begrenzt ist. Die Referenzstreifen sollen aufgrund ihres bekannten und konstanten Helligkeitswertes zum Abgleich der Abtasteinrichtung für den transparenten Ausschnitt herangezogen werden.

Der Erfindung liegt die Aufgabe zugrunde, eine Zentrifuge zu schaffen, in deren Antriebseinheit eine Separationskammer in beliebiger Position einsetzbar ist, die verhältnismäßig einfach herzustellen ist, wobei deren Markierungselement mit hoher Sicherheit abtastbar ist.

Die Lösung dieser Aufgabe erfolgt erfindungsgemäß mit den Merkmalen des Patentanspruchs 1.

Die Separationskammer der erfindungsgemäßen Zentrifuge ist mit einem Markierungselement versehen, das eine Referenzposition der Kammer angibt. Ferner ist eine Abtastvorrichtung vorgesehen, welche die Separationskammer zur Detektion des Markierungselementes abtastet.

Mit dem Markierungselement kann als Referenzposition beispielsweise die Position des Phasengrenzenfensters der Kammer gekennzeichnet werden, um die Phasengrenzendetektoreinrichtung der Zentrifuge ansteuern zu können. Da die Lage des Phasengrenzenfensters durch ein Markierungselement an der Kammer selbst ermittelt wird, kann die Kammer in jeder beliebigen Position in die Antriebseinheit der Zentrifuge eingesetzt werden. Damit ist ausgeschlossen, dass die Phasengrenze infolge einer Fehlbedienung der Zentrifuge falsch geregelt wird. Eine entsprechende Anweisung bzw. Schulung des mit der Bedienung der Zentrifuge betrauten Personals kann somit entfallen. Ferner vereinfacht sich die Bedienung der Zentrifuge, da beim Einsetzen der Separationskammer in die Antriebseinheit auf eine bestimmte Lage der Kammer nicht zu achten ist.

Von besonderem Vorteil ist, dass das Markierungselement durch ein schräggestelltes Segment im Abtastbereich der Separationskammer gebildet wird, so dass größere Veränderungen an der Kammer nicht vorgenommen werden müssen. Bei der Herstellung der Einweg-Kammer sind für die Ausbildung des Markierungselements keine zusätzlichen Arbeitsschritte erforderlich. Das Markierungselement, das einstückiger Bestandteil der Separationskammer ist, verursacht daher keine zusätzlichen Kosten und verändert auch nicht die Eigenschaften der Separationskammer bezüglich aller für die Anwendung wichtigen Parameter. Es können zur Lageerkennung der Kammer prinzipiell sowohl mechanische als auch optische Abtasteinrichtungen Verwendung finden.

Bei der erfindungsgemäßen Zentrifuge erfolgt die Abtastung vorteilhafterweise mit optischen Mitteln. Die optische Abtasteinrichtung zur Detektion des Markierungselements weist eine Lichtquelle, deren Licht auf den Abtastbereich der Separationskammer trifft und eine Detektoreinrichtung auf, die das von der Separationskammer reflektierte Licht detektiert. Aus der Veränderung der Verteilung des von der Separationskammer reflektierten Lichts infolge der Rotation der Kammer kann die Referenzposition ermittelt werden, wobei davon auszugehen ist, dass eine bestimmte Lichtverteilung auf der Separationskammer für die Referenzposition charakteristisch ist. Die Lichtverteilung auf der Kammer kann z. B. mit einer als Kamera ausgebildeten Detektoreinrichtung erfasst werden. So ist es möglich, die gesamte Separationskammer abzubilden, um die Position des Markierungselementes zu erkennen. Es kann aber auch nur ein Teil der Separationskammer, z. B. mit einer entsprechend angeordneten CCD-Zeile oder mit einer einzelnen Photodiode abgetastet werden.

Die Detektoreinrichtung ist zweckmäßigerweise als optischer Detektor ausgebildet und im Strahlengang des von dem schräggestellten Kammersegments reflektierten Lichtes angeordnet. Das Licht wird also dann am stärksten von der Detektoreinrichtung empfangen, wenn dieses auf das schräggestellte Kammersegment trifft. Alternativ ist es aber auch möglich, die Detektoreinrichtung derart anzuordnen, dass die Detektoreinrichtung außerhalb des Strahlengangs des an dem schräggestellten Kammersegments reflektierten Lichtes, aber innerhalb des Strahlenbereiches des an dem übrigen Teil des Abtastbereichs reflektierten Lichtes angeordnet ist. Das Ausgangssignal des optischen Detektors ist dann entsprechend zu negieren, um ein Referenzpositionssignal gewinnen zu können.

Ein besonderer Vorteil der optischen Abtasteinrichtung der erfindungsgemäßen Zentrifuge liegt darin, dass die Detektion des reflektierten Lichtstrahls mit demselben Lichtempfänger erfolgen kann, der auch Bestandteil des Phasengrenzendetektors ist. Bei entsprechender Anordnung der Komponenten kann mit der Lichtquelle des Phasengrenzendetektors auch der Abtastbereich der Separationskammer bestrahlt werden. Somit ist von der Geräteseite (Hardware) kein zusätzlicher Aufwand erforderlich.

Im folgenden wird unter Bezugnahme auf die Zeichnungen ein Ausführungsbeispiel der Erfindung näher erläutert.

Es zeigen:
- Fig. 1: die Zentrifuge in schematischer Darstellung,
- Fig. 2: die in die Antriebseinheit der Zentrifuge einsetzbare Separationskammer in der Draufsicht,
- Fig. 3: einen Schnitt durch die Separationskammer entlang der Linie III-III von Fig. 2 in vergrößerter Darstellung,
- Fig. 4: einen Schnitt entlang der Linie IV-IV von Fig. 2 in vergrößerter Darstellung,
- Fig. 5: den Strahlengang zur Positionserkennung an nicht schräggestellten Segmenten der Separationskammer und
- Fig. 6: den Strahlengang zur Positionserkennung an dem schräggestellten Kammersegment.

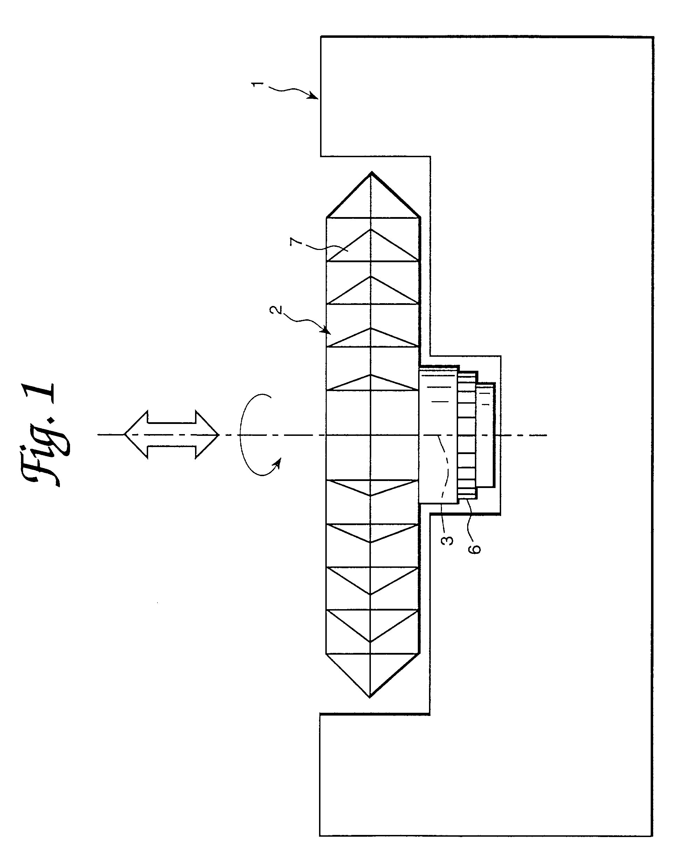

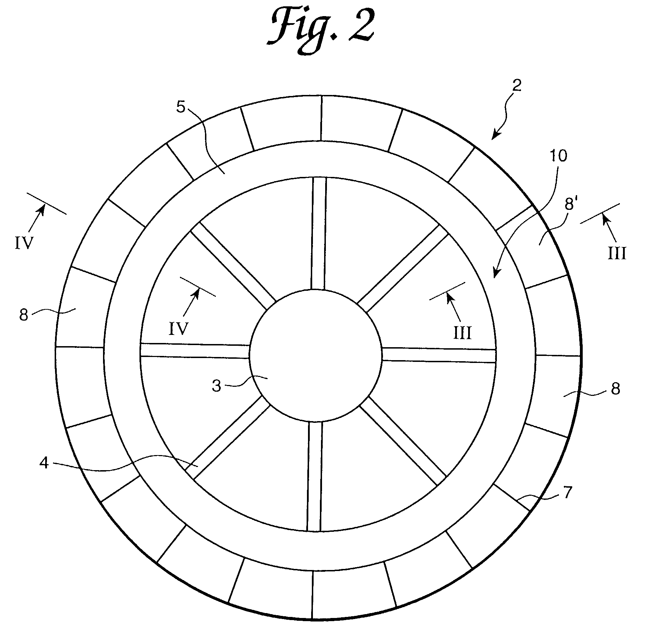

Fig. 1 zeigt die erfindungsgemäße Zentrifuge zur Separation von Vollblut in seine Bestandteile in schematischer Darstellung. Die Zentrifuge besteht aus einer Antriebseinheit 1 und einer in die Antriebseinheit einsetzbaren Separationskammer 2. Die in Fig. 2 in der Draufsicht gezeigte Separationskammer 2 ist eine Einweg-Kammer aus transparentem Kunststoff. Sie weist eine zentrale Drehachse 3 auf, die über radiale Stege 4 einen im wesentlichen ringförmigen Separationskanal 5 zur Aufnahme des Vollblutes trägt, das durch die Rotation der Kammer in seine Bestandteile separiert wird. Wenn die Kammer 2 in die Antriebseinheit 1 der Zentrifuge eingelegt wird, kommt die Außenverzahnung 6 der Drehachse 3 mit der Verzahnung von in den Fign. nicht dargestellten Antriebsmitteln der Antriebseinheit 1 in Eingriff, so daß die Separationskammer 2 in Rotation versetzt werden kann.

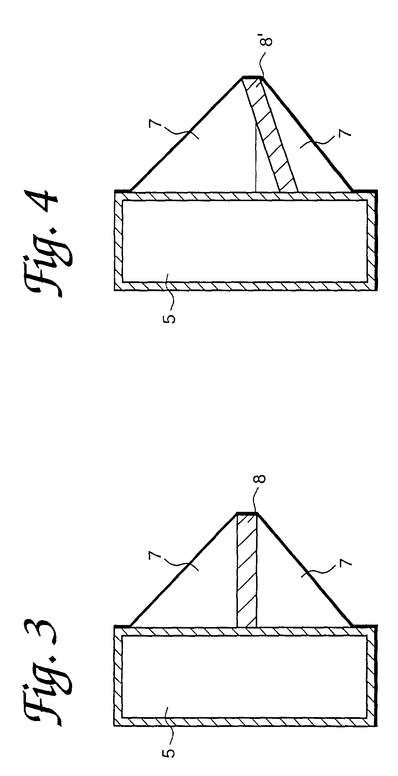

Der äußere an die Außenwand des Separationskanals 5 angrenzende Randbereich der Kammer 2 gliedert sich durch eine Vielzahl von umfängsmäßig verteilt angeordneten Rippen 7 in einzelne Segmente 8, die bis auf ein einziges Kammersegment 8' alle in horizontaler Ebene, d.h. in einer quer zur Rotationsachse verlaufenden Ebene, liegen. Die Kammersegmente 8 bilden einen sich ringförmig um die Drehachse 3 der Kammer 2 erstreckenden Abtastbereich 9. Sie wirken wie ein halbdurchlässiger Spiegel, so daß ein auf die Segmente auftreffender Lichtstrahl teilweise reflektiert wird. Das gegenüber der Horizontalebene nach unten um ca 20° geneigte Kammersegment 8' bildet ein Markierungselement, das eine Referenzposition der Kammer kennzeichnet (Fig. 4).

Die Zentrifuge weist ferner eine in den Fign. nicht dargestellte Phasengrenzendetektionseinrichtung auf, die die genaue Lage der Phasengrenze zwischen den separierten Blutkomponenten in dem Separationskanal 5 der Kammer 2 bestimmt und die Förderrate der an die Kammer angeschlossenen Pumpen regelt. Eine derartige Phasengrenzendetektionseinrichtung ist in der EP-A-0 116 716 beschrieben. Zur Vermeidung von Wiederholungen wird auf diese Druckschrift Bezug genommen.

Die Überwachung der Phasengrenze erfolgt innerhalb eines Phasengrenzenfensters 10 der Separationskammer 2. Um die Lage des Phasengrenzenfensters bestimmen zu können, ist es erforderlich, die momentane Drehstellung der durch die Antriebseinheit 1 der Zentrifuge in Rotation versetzten Kammer 2 zu erfassen. Die Abtasteinrichtung 11 zur Positionserkennung der Separationskammer 2 wird nachfolgend beschrieben.

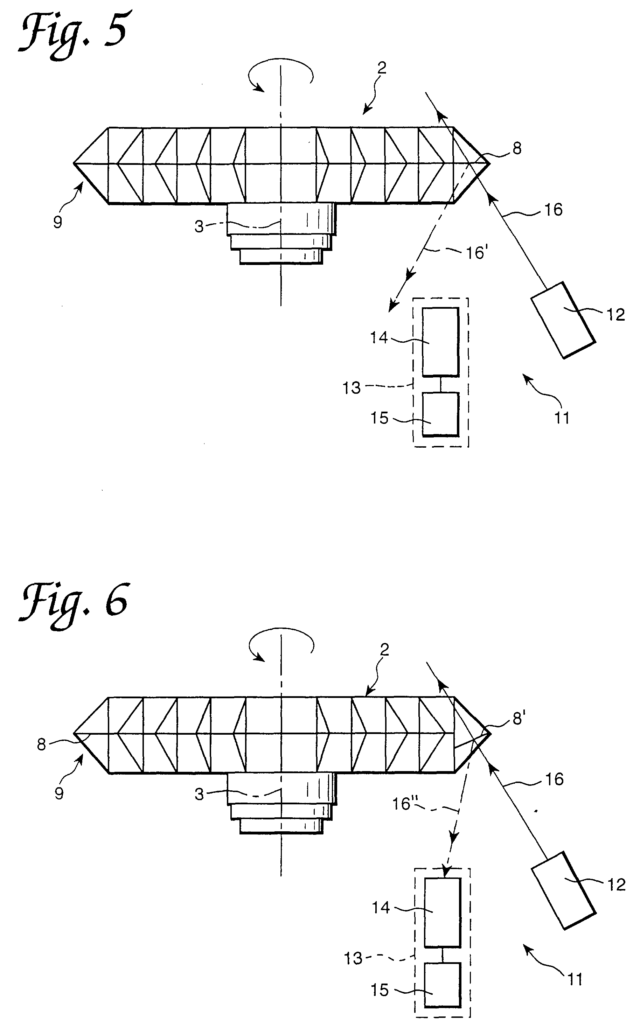

Die Abtasteinrichtung 11 weist eine Lichtquelle 12 und eine Detektoreinrichtung 13 auf. Die in den Fign. 5 und 6 mit gestrichelten Linien umrandete Detektoreinrichtung 13 besteht aus einem Lichtempfänger 14 und einer nachgeschalteten Auswerteinheit 15. Als Lichtempfänger kann z.B. eine Photodiode oder ein Phototransistor Verwendung finden. Zur Fokussierung der Lichtstrahlen können entsprechende Linsenanordnungen vorgesehen sein. Die Lichtquelle 12 der Abtasteinrichtung 11 ist derart angeordnet, daß der von der Lichtquelle ausgehende Lichtstrahl 16 auf den sich ringförmig um die Drehachse 3 der Separationskammer 2 erstreckenden Abtastbereich 9 trifft, während sich der Lichtempfänger 14 im Strahlengang des von dem schräggestellten Kammersegment 8' reflektierten Lichtstrahls 16" befindet (Fig. 6). Wenn der Lichtstrahl 16 nun auf die waagerechten Kammersegmente 8 trifft, wird dieser bezüglich der Rotationsachse um einen anderen Winkel reflektiert, so daß der Lichtstrahl 16' nicht auf den Lichtempfänger 14 gelangt (Fig. 5). Daher liefert der Lichtempfänger 14 nur dann ein Referenzsignal an die Auswerteinheit 15, wenn der Lichtstrahl auf das Markierungselement trifft. Zur Detektion des reflektierten Lichtstrahls ist der Lichtempfänger 14 mit einem entsprechenden Schwellwertschalter ausgestattet. In der Auswerteinheit 15 wird aus dem Referenzsignal des Lichtempfängers 14 die Position der Separationskammer 2 und die momentane Lage des Phasengrenzenfensters 10 in bezug auf die ortsfest angeordnete Phasengrenzendetektionseinrichtung bestimmt.

Der unterhalb des Separationskanals 5 angeordnete Lichtempfänger 14 kann nicht nur zur Detektion des an dem Markierungselement 8' reflektierten Lichtstrahls 16" verwendet werden, sondern kann auch zur Erkennung der Lage der Phasengrenze dienen. Daher kann der Empfänger 14 sowohl zur Positionserkennung der Separationskammer 2 als auch zur Bestimmung der Lage der Phasengrenze herangezogen werden.

Da bei der erfindungsgemäßen Vorrichtung die Position, in der die Separationskammer 2 in die Antriebseinheit 1 eingesetzt wird, nicht beachtet werden muß, ist eine fehlerhafte Bedienung des Geräts ausgeschlossen. Ferner vereinfacht sich die Bedienung der Zentrifuge, ohne daß an der Separationskammer größere Veränderungen vorgenommen werden müßten.

## Patentansprüche

1. Zentrifuge mit einer Antriebseinheit (1), einer in die Antriebseinheit (1) einsetzbaren Separationskammer (2) und einer Abtasteinrichtung (11) zur Positionserkennung der durch die Antriebseinheit in Rotation versetzbaren Separationskammer, an der ein Markierungselement (8') vorgesehen ist, das eine Referenzposition der Kammer angibt, wobei die Abtasteinrichtung (11) die Separationskammer (2) zur Detektion des Markierungselements (8') abtastet, dadurch gekennzeichnet, dass das Markierungselement durch ein schräggestelltes Segment (8') gebildet wird, das mit der Separationskammer einstückig ist.

2. Zentrifuge nach Anspruch 1, dadurch gekennzeichnet, dass die Abtasteinrichtung (11) eine Lichtquelle (12), deren Licht (16) auf die Separationskammer (2) trifft und eine Detektoreinrichtung (13) zur Detektion der Veränderung der Verteilung des von der Separationskammer (2) reflektierten Lichtes (16', 16") aufweist.

3. Zentrifuge nach Anspruch 1 oder 2, dadurch gekennzeichnet, dass die Abtasteinrichtung (11) eine Lichtquelle (12), deren Licht (16) auf die Separationskammer (2) trifft, und eine Detektoreinrichtung (13) zur Detektion der Veränderung der Verteilung des durch die Kammer durchscheinenden Lichtes aufweist.

4. Zentrifuge nach einem der Ansprüche 1 bis 3, dadurch gekennzeichnet, dass die Detektoreinrichtung (13) als optischer Detektor ausgebildet und im Strahlengang des von dem schräggestellten Kammersegment (8') reflektierten Lichtes (16") angeordnet ist.

5. Zentrifuge nach einem der Ansprüche 1 bis 4, dadurch gekennzeichnet, dass die Separationskammer (2) ein im wesentlichen rotationssymmetrischer Körper aus transparentem Material ist, der einen im wesentlichen ringförmigen oder spiralförmigen Separationskanal (5) zur Aufnahme eines Fluids aufweist, das durch die Rotation der Separationskammer (2) in seine Bestandteile separiert wird und dass sich der Abtastbereich (9) zur Erfassung des Markierungselements (8') in einer quer zur Drehachse (3) der Separationskammer verlaufenden Ebene entlang des Außenbereichs der Separationskammer an den Separationskanal (5) angrenzend erstreckt.

## Claims

1. A centrifuge with a drive unit (1), a separation chamber (2) which can be inserted into the drive unit (1) and with a scanning means (11) for recognising the position of the separation chamber which is adapted to be rotatingly displaced by the drive unit and on which there is a marking element (8') and which indicates a reference position of the chamber, the scanning means (11) scanning the separation chamber (2) to detect the marking element (8'), characterised in that the marking element is constituted by an obliquely positioned segment (8') which is in one piece with the separation chamber.

2. A centrifuge according to claim 1, characterised in that the scanning means (11) comprises a light source (12), the light (16) from which strikes the separation chamber (2) and a detector means (13) for detecting the variation in the distribution of the light (16', 16") reflected by the separation chamber (2).

3. A centrifuge according to claim 1 or 2, characterised in that the scanning means (11) comprises a light source (12) of which the light (16) strikes the separation chamber (2), and a detector means (13) for detecting the variation in distribution of the light passing through the chamber.

4. A centrifuge according to one of claims 1 to 3, characterised in that the detector means (13) is constructed as an optical detector and is disposed in the path of the light (16") reflected by the slantingly disposed chamber segment (8').

5. A centrifuge according to one of claims 1 to 4, characterised in that the separation chamber (2) is a body of transparent material and which is substantially symmetrical in rotation and which comprises a substantially annular spiral or separation passage (5) to accommodate the fluid which is separated into its constituent parts by rotation of the separation chamber (2) and in that the scanning zone (9) for detecting the marking element (8') extends in a plane extending crosswise to the axis of rotation (3) of the separation chamber, along the outer part of the separation chamber and adjacent to the separation passage (5).

## Revendications

1. Centrifugeuse avec un bloc d'entraînement (1), une chambre de séparation (2) se montant dans le bloc d'entraînement (1) et un dispositif de balayage (11) servant à détecter la position de la chambre de séparation déplaçable en rotation par le bloc d'entraînement, sur laquelle est prévu un élément de marquage (8') indiquant une position de référence de la chambre, le dispositif de balayage (11) balayant la chambre de séparation (2) pour détecter la position de l'élément de marquage (8'), caractérisée en ce que l'élément de marquage est formé par un segment oblique (8') qui est d'un seul tenant avec la chambre de séparation.

2. Centrifugeuse selon la revendication 1, caractérisée en ce que le dispositif de balayage (11) présente une source lumineuse (12) dont la lumière (16) est incidente à la chambre de séparation (2), ainsi qu'un dispositif détecteur (13) pour détecter la modification de la distribution de la lumière (16', 16") réfléchie par la chambre de séparation (2).

3. Centrifugeuse selon la revendication 1 ou la revendication 2, caractérisée en ce que le dispositif de balayage (11) présente une source lumineuse (12) dont la lumière (16) est incidente à la chambre de séparation (2), ainsi qu'un dispositif détecteur (13) pour détecter la modification de la distribution de la lumière qui traverse la chambre.

4. Centrifugeuse selon l'une des revendications 1 à 3, caractérisée en ce que le dispositif détecteur (13) se présente sous la forme d'un détecteur optique et est monté dans le trajet du faisceau de lumière (16") réfléchie par le segment de chambre oblique (8').

5. Centrifugeuse selon l'une des revendications 1 à 4, caractérisée en ce que la chambre de séparation (2) est un élément en matériau transparent, sensiblement symétrique par rapport à son axe de rotation, qui présente un canal de séparation (5) sensiblement en forme d'anneau ou de spirale destiné à recevoir un fluide qui est séparé en ses composants par la rotation de la chambre de séparation (2), et en ce que la zone de balayage (9) pour la détection de l'élément de marquage (8') s'étend dans un plan perpendiculaire à l'axe de rotation (3) de la chambre de séparation, le long de la zone extérieure de la chambre de séparation voisine du canal de séparation (5).
